# EUROPÄISCHE PATENTSCHRIFT

(11) **EP 3 279 135 B1**
(45) Veröffentlichungstag und Bekanntmachung des Hinweises auf die Patenterteilung: **20.03.2019**
(21) Anmeldenummer: 17177430.0
(22) Anmeldetag: 22.06.2017
(51) Int. Cl.: B66F 9/075, B66F 17/00, B60Q 1/50, G02B 27/20, G03B 21/20

(54) **WARNVORRICHTUNG FÜR EIN FLURFÖRDERZEUG**
WARNING DEVICE FOR AN INDUSTRIAL TRUCK
DISPOSITIF D'AVERTISSEMENT POUR UN CHARIOT DE MANUTENTION

(30) Priorität: 28.07.2016 DE 102016113975; 03.03.2017 DE 102017104488
(43) Veröffentlichungstag der Anmeldung: 07.02.2018
(73) Patentinhaber: Linde Material Handling GmbH, 63743 Aschaffenburg (DE)
(72) Erfinder: SCHUCK, Johannes, 63840 Hausen (DE); MATHIAS, Johannes, 63811 Stockstadt am Main (DE); MÜLLER, Klaus, 74831 Gundelsheim (DE); SCHÖPS, Konstantin, 71254 Ditzingen (DE)
(74) Vertreter: Patentship Patentanwaltsgesellschaft mbH

(56) Entgegenhaltungen:
- WO-A1-2015/193996
- DE-A1-102012 024 494
- DE-U1-202008 011 955
- US-A1- 2002 118 344
- US-A1- 2015 146 415
- US-B1- 7 580 192

## Beschreibung

Die Erfindung betrifft ein Warnvorrichtung für ein Flurförderzeug, die an dem Flurförderzeug angeordnet ein bildhaftes Hinweissymbol, insbesondere ein bildhaftes Warnsymbol, auf eine Fahrbahn projiziert, wobei die Warnvorrichtung als Projektor ausgebildet ist, der eine Lichtquelle, die einen Lichtstrom aussendet, und eine Bildvorlage des zu projizierenden Hinweissymbols aufweist, die von dem von der Lichtquelle erzeugten Lichtstrom durchleuchtbar ist.

Die Erfindung betrifft weiterhin ein Flurförderzeug mit einer derartigen Warnvorrichtung

Als Gegengewichtsgabelstapler, Schubmaststapler oder Lagertechnikgeräte ausgebildete Flurförderzeugen werden überwiegend auf Betriebsgeländen und in Produktionsbereichen sowie Lagerbereichen eingesetzt, in denen sich auch Personen aufhalten und in denen die Sichtverhältnisse durch Lagerregale, eingelagerte Lasten, Produktionsanlagen sowie die räumlichen Umstände eingeschränkt sind. Es ist bereits bekannt, als Warnvorrichtung zur Absicherung des Arbeits- und/oder Fahrbereichs das Flurförderzeug mit einer optischen Warnvorrichtungen auszurüsten, die die Aufmerksamkeit der Personen in der Umgebung des Flurförderzeugs erregen soll. Eine seit langem bekannte und weit verbreitete Lösung hierfür sind rotierende Rundumleuchten oder blinkende Leuchten, die im oberen Bereich oder an einem Fahrerschutzdach der Flurförderzeuge angeordnet sind, häufig als gelbe Warnleuchten.

Nachteilig an diesem Stand der Technik ist, dass solche Leuchten aufgrund der oftmals großen Anzahl an gleichzeitig fahrenden Flurförderzeugen sowie der nicht auf einen bestimmten Gefahrenbereich, beispielsweise in Bewegungsrichtung vor dem Flurförderzeug, beschränkten Warnung zu einem Gewöhnungseffekt und der Gefahr der Nichtbeachtung führen. Auch wird ein andauernd vorhandenes, blinkendes Licht, das möglicherweise noch über Reflexionen ständig in allen Bereichen eines Lagers wahrnehmbar ist, oftmals als unangenehm empfunden und führt zu Akzeptanzproblemen.

Aus der gattungsgemäßen DE 10 2012 024 494 A1 ist ein Flurförderzeug mit einer optischen Warnvorrichtung zur Absicherung des Arbeits- und/oder Fahrbereichs bekannt, bei dem in Fahrtrichtung vor das Flurförderzeug ein bildhaftes Hinweissymbol auf die Fahrbahn projiziert wird, um Personen in der Umgebung vor dem herannahenden Flurförderzeug zu warnen. Dadurch kann beispielsweise in geräuschintensiven Umgebungen vor einem herannahenden Flurförderzeug gezielt gewarnt werden.

Bei der DE 10 2012 024 494 A1 ist die Warnvorrichtung als Projektor ausgebildet, der eine Lichtquelle aufweist, die einen Lichtstrom aussendet, und eine Bildvorlage des zu projizierenden Hinweissymbols aufweist, die von dem von der Lichtquelle erzeugten Lichtstrom durchleuchtbar ist.

Bei dem aus der DE 10 2012 024 494 A1 bekannten Projektor ist das projizierte Hinweissymbol von der durchleuchtbaren bzw. durchstrahlbaren Bildvorlage vorgegeben. Bei der Bildvorlage handelt es sich beispielsweise um ein Dia oder um ein so genanntes Gobo (Graphical Optical Blackout). Derartige Bildvorlage weisen zumindest einen für den Lichtstrom der Lichtquelle lichtdurchlässigen Bereich auf, der dem zu projizierenden Hinweissymbol entspricht, und einen den Lichtstrom der Lichtquelle abschattenden Bereich auf. Bei dem aus der DE 10 2012 024 494 A1 bekannten Projektor wird das von einer Lichtquelle ausgesandte Licht vollflächig auf die als DIA bzw. Gobo ausgebildete Bildvorlage gestrahlt, um das Hinweissymbol zu erzeugen und auf die Fahrbahn zu projizieren. Hier besteht jedoch der Nachteil, dass es bei bestimmten nicht runden Motiven als Hinweissymbol zu einem sehr großen Lichtstromverlust durch Abschattung kommt, da das Licht der Lichtquelle auch auf die den Lichtstrom der Lichtquelle abschattenden Bereich der Bildvorlage trifft. Dies führt dazu, dass im Projektor hohe Lichtstromverluste auftreten und der Projektor eine geringe Lichtausbeute aufweist, so dass das auf die Fahrbahn projizierte Hinweissymbol eine verringerte Helligkeit aufweist.

Der vorliegenden Erfindung liegt die Aufgabe zu Grunde, eine Warnvorrichtung der eingangs genannten Gattung zur Verfügung zu stellen, die geringe Lichtstromverluste aufweist.

Diese Aufgabe wird erfindungsgemäß dadurch gelöst, dass die Bildvorlage zumindest einen für den Lichtstrom der Lichtquelle lichtdurchlässigen Bereich und einen den Lichtstrom der Lichtquelle abschattenden Bereich aufweist, wobei der Projektor eine zwischen der Lichtquelle und der Bildvorlage angeordnete Freiformlinse aufweist, wobei die Freiformlinse derart ausgeführt ist, dass der Lichtstrom der Lichtquelle auf den lichtdurchlässigen Bereich der Bildvorlage gebündelt wird. Durch eine Freiformlinse, die zwischen der Lichtquelle und der Bildvorlage angeordnet ist, kann der Lichtstrom der Lichtquelle derart gebündelt werden, dass der Lichtstrom die Konturen des zu prozierenden Hinweissymbols besitzt und der Lichtstrom der Lichtquelle auf den lichtdurchlässigen Bereich der Bildvorlage gebündelt wird. Hierdurch wird verhindert, dass der Lichtstrom der Lichtquelle auch auf den den Lichtstrom der Lichtquelle abschattenden Bereich der Bildvorlage trifft und gestrahlt wird. Bei dem erfindungsgemäßen Projektor wird somit erzielt, dass die von dem Lichtstrom der Lichtquelle angestrahlte abgeschattete Fläche der Bildvorlage deutlich kleiner wird, so dass mehr Licht auf den lichtdurchlässigen Bereich der Bildvorlage gestrahlt wird und somit mehr Licht durch die Bildvorlage gelangt, wodurch der Projektor eine höhere Lichtausbeute aufweist und eine hellere Projektion des Hinweissymbols auf der Fahrbahn bei gleicher Lichtleistung der Lichtquelle entsteht. Bei dem erfindungsgemäßen Projektor entstehen somit deutlich verringerte Lichtstromverluste durch die geringere Abschattung von Bildbereichen bei bestimmten Motiven. Damit einhergehend weist mit dem erfindungsgemäßen Projektor die Projektion des Hinweissymbols auf der Fahrbahn eine größere Helligkeit bei gleicher Lichtleistung der Lichtquelle auf. Dies führt weiterhin zu einem energieeffizienten Betrieb des Projektors.

Gemäß einer vorteilhaften Weiterbildung der Erfindung weist der Projektor einen Kondensor auf, der zwischen der Lichtquelle und der Bildvorlage angeordnet ist, wobei die Freiformlinse zwischen dem Kondensor und der Bildvorlage angeordnet ist. Bei dem erfindungsgemäßen Projektor dient der Kondensor dazu, einen möglichst großen Teil des Lichtes der Lichtquelle in den abbildenden Strahlengang des Projektors gleichmäßig einzubringen. Mit einer zwischen dem Kondensor und der Bildvorlage angeordneten Freiformlinse wird es mit geringen zusätzlichen Bauaufwand ermöglicht, den von dem Kondensor erzeugten Strahlengang auf die lichtdurchlässigen Bereiche der Bildvorlage zu bündeln, um ein Anstrahlen der abschattenden und lichtundurchlässigen Bereiche der Bildvorlage zu minimieren oder gänzlich zu vermeiden.

Gemäß einer vorteilhaften Weiterbildung der Erfindung weist der Projektor einen Kondensor auf, der aus mehreren Kondensorlinsen besteht, wobei eine der Kondensorlinsen des Kondensors als die Freiformlinse ausgebildet ist, die den Lichtstrom der Lichtquelle auf den lichtdurchlässigen Bereich der Bildvorlage bündelt. Der Kondensor weist somit die Funktion der Freiformlinse auf und bündelt den Lichtstrom der Lichtquelle auf den lichtdurchlässigen Bereich der Bildvorlage. Ein Kondensor besteht in der Regel aus einer oder mehreren, beispielsweise zwei, Kondensorlinsen. Sofern eine der Kondensorlinsen derart ausgeführt ist, dass diese die Funktion der Freiformlinse aufweist und den Lichtstrom der Lichtquelle auf den lichtdurchlässigen Bereich der Bildvorlage bündelt, bündelt somit diese Konsensorlinse den Lichtstrom der Lichtquelle auf den lichtdurchlässigen Bereich der Bildvorlage und verteilt den Lichtstrom der Lichtquelle gleichmäßig auf den lichtdurchlässigen Bereich der Bildvorlage, so dass ein Anstrahlen der abschattenden und lichtundurchlässigen Bereiche der Bildvorlage minimiert oder gänzlich vermieden werden kann.

Besondere Vorteile ergeben sich, wenn der Projektor ein Gehäuse aufweist, an dem benachbart zu der Lichtquelle ein Kühlkörper mit Kühlrippen angeordnet ist. Sofern der erfindungsgemäße Projektor am Gehäuse außenliegenden Kühlrippen für die Lichtquelle aufweist, wird mit geringem Bauaufwand eine passive Kühlung des Projektors erzielt, die eine effektive Kühlung des Projektors ohne zusätzliche Lüfter ermöglicht.

Gemäß einer vorteilhaften Weiterbildung der Erfindung ist die Freiformlinse als TIR (Total Internal Reflection)-Linse ausgebildet, die zumindest eine TIR (Total Internal Reflection)-Fläche aufweist. Eine TIR (Total Internal Reflection)-Linse ist eine spezielle Form eines Kollimators und ist in der Lage durch Reflektionen an der Grenzfläche zur Umgebung einen Großteil des von einer Lichtquelle emittierten Lichtes einzufangen. Eine TIR (Total Internal Reflection)-Linse ermöglicht es weiterhin, die Lichtstrahlen der Lichtquelle verlustfrei zu reflektieren und die Lichtstrahlen gezielt in eine Richtung auszusenden, so dass eine geringe Strahldivergenz erzielt wird. Dies ermöglicht es, mit dem erfindungsgemäßen Projektor das Hinweissymbol mit hoher Lichtausbeute auf die Fahrbahn zu projizieren.

Gemäß einer vorteilhaften Weiterbildung der Erfindung ist die Freiformlinse derart ausgebildet, dass der Lichtstrom der Lichtquelle mit einem Lichtgradienten auf die Bildvorlage trifft, so dass bei einer geneigt angeordneten Projektionsfläche eine gleichmäßige Lichtverteilung auf der Projektionsfläche erzielt wird. Der Lichtgradient ist somit derart ausgeführt und gewählt, dass bei einer geneigt angeordneten Projektionsfläche, die von der Fahrbahn gebildet ist, und somit bei einer Schrägprojektion des Hinweissymbols auf die Fahrbahn eine gleichmäßige Lichtverteilung auf der Projektionsfläche entsteht und somit eine gleichmäßige Ausleuchtung des auf die Fahrbahn projizierten Hinweissymbols erzielt wird. Hierdurch wird erzielt, dass bei einer Schrägprojektion des Hinweissymbols auf die Fahrbahn weiter entfernte Bereiche des Hinweissymbols genauso hell sind wie näher liegende Bereiche des Hinweissymbols, so dass das auf die Fahrbahn projizierte Hinweissymbol sicher und deutlich wahrgenommen werden kann. Mit einer Freiformlinse, die auch als TIR-Linse ausgebildet sein kann, kann mit geringem Aufwand ein derartiger Lichtgradient erzielt werden.

Um einen derartigen Lichtgradienten zu erzeugen, kann gemäß einer vorteilhaften Ausgestaltungsform der Erfindung die Freiformlinse an einer lichtaustretenden Abschlussfläche facettenartig ausgebildet sein. Durch eine facettenartige Ausführung der vorderen, lichtaustretenden Abschlussfläche, die beispielsweise mit Facetten besetzt sein kann, können der Freiformlinse zusätzliche Eigenschaften in Bezug auf die Lichtverteilung verliehen werden und ein gewünschter Lichtgradient erzeugt werden.

Zweckmäßigerweise ist die lichtaustretende Abschlussfläche aus mehreren planaren Einzelflächen gebildet, die unterschiedliche Winkel zueinander aufweisen. Dies ermöglicht bei geringem Bauaufwand eine facettenartige Ausführung der vorderen, lichtaustretenden Abschlussfläche der Freiformlinse, um eine gewünschten Lichtgradienten zu erzeugen.

Die Erfindung betrifft weiterhin ein Flurförderzeug mit einer erfindungsgemäßen Warnvorrichtung.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Warnvorrichtung,
- Figur 2: die erfindungsgemäße Warnvorrichtung der Figur 1 in einer schematischen Darstellung,
- Figur 3: eine Weiterbildung einer erfindungsgemäßen Warnvorrichtung in einer schematischen Darstellung,
- Figur 4a: eine Seitenansicht einer als TIR-Linse ausgebildeten Freiformlinse einer erfindungsgemäßen Warnvorrichtung,
- Figur 4b: einen Längsschnitt der Figur 4a,
- Figur 5: eine Bildvorlage der Warnvorrichtung der Figuren 2 oder 3 in einer Draufsicht.

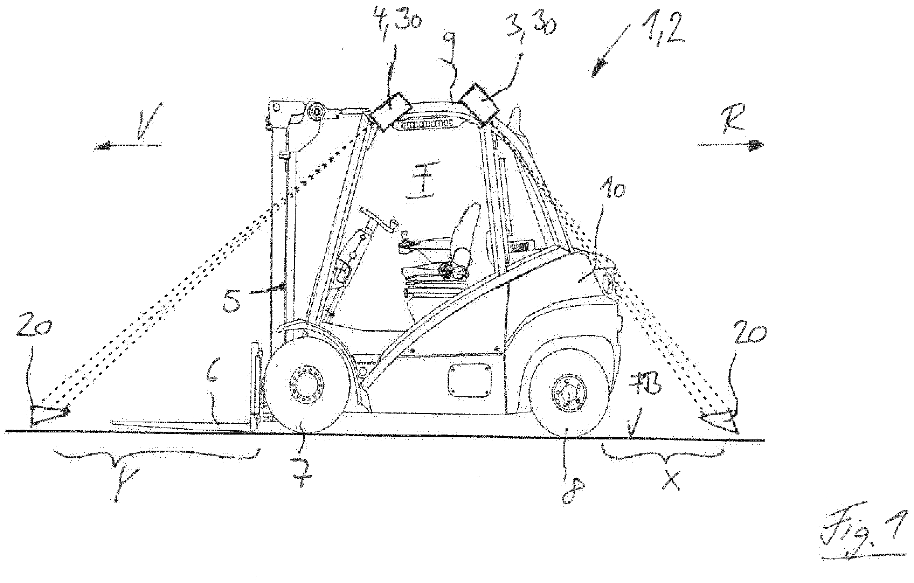

In der Figur 1 ist ein erfindungsgemäßes Flurförderzeug 1 in einer Seitenansicht dargestellt, das mit einer ersten, hinten angeordneten Warnvorrichtung 3 und/oder zweiten, vorne angeordneten Warnvorrichtung 4 versehen ist. Alternativ oder zusätzlich können eine oder mehrere Warnvorrichtungen zur Seite rechts und/oder links des Flurförderzeugs 1 vorgesehen sein. Das Flurförderzeug 1 ist im dargestellten Ausführungsbeispiel als Gegengewichtsgabelstapler 2 ausgebildet.

Das Flurförderzeug 1 weist ein an einem Hubmast 5 anhebbar und absenkbar angeordnetes Lastaufnahmemittel 6 auf. Das Lastaufnahmemittel 6 ist im dargestellten Ausführungsbeispiel als eine von zwei Gabelzinken gebildete Lastgabel ausgeführt. Der Hubmast 5 ist im vorderen Bereich des Flurförderzeugs 1 angeordnet. In Fahrzeugslängsrichtung hinter dem Hubmast 5 befindet sich ein Fahrerschutzdach 9 und hinter dem Fahrerschutzdach 9 ein Gegengewicht 10. Unterhalb des Fahrerschutzdaches 9 ist ein Fahrerarbeitsplatz F für eine Bedienperson des Flurförderzeugs 1 angeordnet. Das Flurförderzeug weist angetriebene Vorderräder 7 und gelenkte Hinterräder 8 auf, mit denen sich das Flurförderzeug 1 auf dem Boden bzw. einer Fahrbahn FB fährt.

Mit der ersten Warnvorrichtung 3 wird bei einer Rückwärtsfahrt des Flurförderzeugs 1 in der Rückwärtsfahrtrichtung, die in der Figur 1 mit dem Pfeil R veranschaulicht ist, ein bildhaftes Hinweissymbol 20 mit hoher Leuchtkraft im Abstand x (Projektionsabstand) von wenigen Metern auf den Boden bzw. auf die Fahrbahn FB als Projektionsebene projiziert, um zur Vermeidung von Unfällen den von der Bedienperson des Flurförderzeugs schlecht einsehbaren Rückfahrbereich abzusichern und die in diesem Bereich befindlichen Personen zu entsprechenden Vorsichtsmaßnahmen und Verhaltensweisen oder zur Unterlassung bestimmter Verhaltensweisen aufzufordern. Die erste Warnvorrichtung 3 ist als Projektor 30 ausgebildet, der oben am Fahrerschutzdach 9 befestigt ist. Bei Rückwärtsfahrt eilt das projizierte Hinweissymbol 20 dem rückwärtsfahrenden Flurförderzeug 1 voraus und warnt dadurch die sich im Gefahrenbereich aufhaltenden Personen. Die erste Warnvorrichtung 3, die ein Hinweissymbol 20 nach hinten projiziert, kann nur bei einer Rückwärtsfahrt des Flurförderzeugs 1 angeschaltet sein oder im Dauerbetrieb bei einer Rückwärtsfahrt und einer Vorwärtsfahrt des Flurförderzeugs 1 und somit unabhängig von der Fahrtrichtung angeschaltet sein.

Mit der zweiten Warnvorrichtung 4 wird bei einer Vorwärtsfahrt des Flurförderzeugs 1 in der Vorwärtsfahrtrichtung, die in der Figur 1 mit dem Pfeil V veranschaulicht ist, ein bildhaftes Hinweissymbol 20 mit hoher Leuchtkraft im Abstand y (Projektionsabstand) von wenigen Metern auf den Boden bzw. auf die Fahrbahn FB als Projektionsebene projiziert, um zur Vermeidung von Unfällen den von der Bedienperson des Flurförderzeugs schlecht einsehbaren Vorwärtsfahrbereich abzusichern und die in diesem Bereich befindlichen Personen zu entsprechenden Vorsichtsmaßnahmen und Verhaltensweisen oder zur Unterlassung bestimmter Verhaltensweisen aufzufordern. Die zweite Warnvorrichtung 4 ist als Projektor 30 ausgebildet, der oben am Fahrerschutzdach 9 befestigt ist. Bei Vorwärtsfahrt eilt das projizierte Hinweissymbol 20 dem vorwärtsfahrenden Flurförderzeug 1 voraus und warnt dadurch die sich im Gefahrenbereich aufhaltenden Personen. Die zweite Warnvorrichtung 4, die ein Hinweissymbol 20 nach vorne projiziert, kann nur bei einer Vorwärtsfahrt des Flurförderzeugs 1 angeschaltet sein oder im Dauerbetrieb bei einer Vorwärtsfahrt und einer Rückwärtsfahrt des Flurförderzeugs 1 und somit unabhängig von der Fahrtrichtung angeschaltet sein.

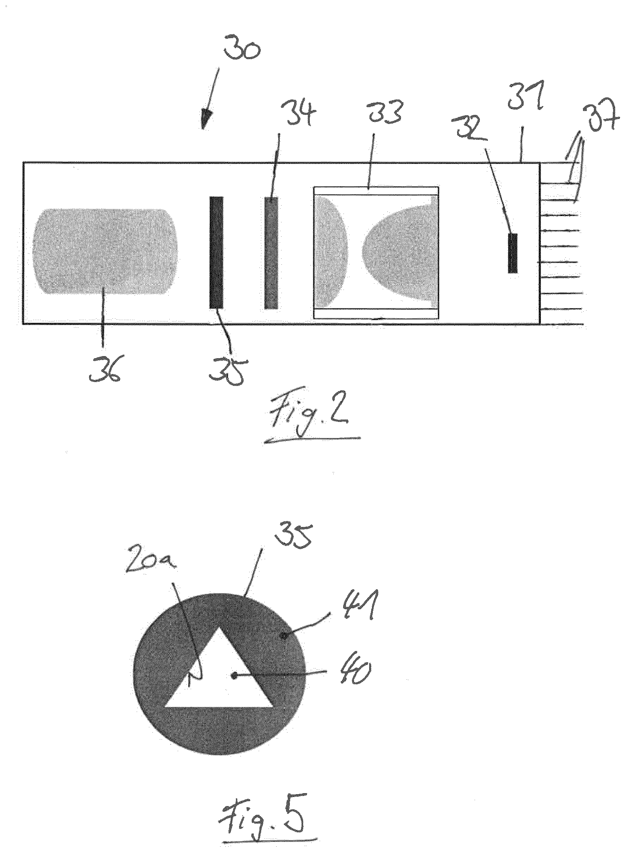

In der Figur 2 ist der Aufbau des erfindungsgemäßen Projektors 30 schematisch dargestellt. Der Projektor 30 weist ein Gehäuse 31 auf, in dem eine Lichtquelle 32, eine Freiformlinse 34 und eine durchleuchtbare Bildvorlage 35 für das Hinweissymbol 20 angeordnet sind. Weiterhin kann der Projektor 30 einen Kondensor 33 aufweisen. Der gegebenenfalls vorhandene Kondensor 33 kann aus einer Linse oder mehreren Linsen, im dargestellten Ausführungsbeispiel zwei Linsen bestehen. Weiterhin kann der Projektor 30 ein Projektionsobjektiv 36 aufweisen. Das von der Lichtquelle 32 erzeugte Licht und dessen Lichtstrahlen werden im Inneren des Gehäuses 31 zu dem Projektionsobjektiv 36 gesendet. Das Licht der Lichtquelle 32 wird bei dem dargestellten Projektor 30 ausgehend von der Lichtquelle 32 zunächst durch den Kondensor 33 geleitet, dann durch die Freiformlinse 34 auf die durchleuchtbare Bildvorlage 35 für das Hinweissymbol 20 geführt und anschließend zu dem Projektionsobjektiv 36 geleitet. Am Projektionsobjektiv 36 treten die Lichtstrahlen aus dem Gehäuse 31 nach außen aus und werden in Richtung der Fahrbahn FB abgestrahlt. Mit dem Projektionsobjektiv 36 kann die Projektionsgröße des projizierten Hinweissymbols 20 und/oder dessen Bildschärfe eingestellt werden kann.

Im dargestellten Ausführungsbeispiel ist das Gehäuse 31 im Bereich der Lichtquelle 32 mit Kühlrippen 37 versehen.

Als Lichtquelle 32 ist bevorzugt eine einzelne Hochleistungs-LED vorgesehen, die direkt mit dem Kühlrippen 37 in Verbindung steht. Mit den Kühlrippen 37 wird eine passive Kühlung des Projektors 30 erzielt, so dass kein zusätzlicher Lüfter zur Kühlung der Lichtquelle 32 erforderlich ist.

Die Bildvorlage 35 ist bevorzugt als ein Dia bzw. als ein Gobo (Graphical Optical Blackout), beispielsweise ein Glas-Gobo, ausgebildet. Die Bildvorlage 35 ist im Gehäuse 31 des Projektors 30 im Strahlengang der Lichtstrahlen zwischen der Lichtquelle 32 und dem Projektionsobjektiv 36 angeordnet, so dass der Projektor 30 nach dem Prinzip der Durchlichtprojektion arbeitet.

Mit dem erfindungsgemäßen Projektor 30 wird das projizierte Hinweissymbol 20 nicht erzeugt, sondern ist von der durchleuchtbaren bzw. durchstrahlbaren Bildvorlage 35 vorgegeben.

Im dargestellten Ausführungsbeispiel enthält die Bildvorlage 35 als Projektionsmotiv 20a des zu projizierenden Hinweissymbols 20 - wie in der Figur 5 näher dargestellt ist, in der die Bildvorlage 35 in einer Draufsicht dargestellt ist - ein grafisches Element in Form eines Dreiecks. Die Bildvorlage 35, die beispielsweise als kreisförmige Scheibe ausgebildet ist, weist hierzu zumindest einen für den Lichtstrom der Lichtquelle 32 lichtdurchlässigen Bereich 40 und einen den Lichtstrom der Lichtquelle 32 abschattenden Bereich 41 auf. Der für den Lichtstrom der Lichtquelle 32 lichtdurchlässigen Bereich 40 entspricht der Gestalt des Projektionsmotivs 20a des zu projizierenden Hinweissymbols 20, im dargestellten Ausführungsbeispiel der Form eines Dreiecks. Es versteht sich, dass die Bildvorlage 35 abweichend von einer kreisförmigen Scheibe eine beliebige Außenkontur aufweisen kann, beispielsweise eine dreieckförmige Kontur, und derart im Gehäuse 31 gehaltert sein kann, dass die abschattenden Bereich 41 von dem Gehäuse 31 oder Gehäuseteilen gebildet werden, die die Bildvorlage haltern.

Bei dem in der Figur 2 dargestellten erfindungsgemäßen Projektor 30 ist die Freiformlinse 34 zwischen der Lichtquelle 32 und der Bildvorlage 35 angeordnet. Bei dem erfindungsgemäßen Projektor 30 der Figur 2, bei dem der Kondensor 33 zwischen der Lichtquelle 32 und der Bildvorlage 35 angeordnet ist, ist die Freiformlinse 34 zwischen dem Kondensor 33 und der Bildvorlage 35 angeordnet.

Die Freiformlinse 34 ist derart ausgeführt, dass der Lichtstrom der Lichtquelle 32 auf den lichtdurchlässigen Bereich 40 der Bildvorlage 35 gebündelt wird. Im dargestellten Ausführungsbeispiel der Bildvorlage 35 bringt somit die Freiformlinse 34 den Lichtstrom in die Form des Dreiecks (Projektionsmotiv 20a) der Bildvorlage 35 und bündelt den Lichtstrom der Lichtquelle 32 auf das Dreieck (Projektionsmotiv 20a) der Bildvorlage 35.

Durch die Freiformlinse 34, die zwischen der Lichtquelle 32 bzw. dem Kondensor 33 und der Bildvorlage 35 angeordnet ist, kann somit der Lichtstrom der Lichtquelle 32 derart gebündelt werden, dass er die Konturen des Projektionsmotivs 20a und somit des zu projizierenden Hinweissymbols 20 besitzt. Mit der Freiformlinse 34 wird somit erzielt, dass weniger Licht der Lichtquelle 32 auf die abschattenden Bereiche 41 der Bildvorlage 35 trifft, so dass die abgeschattete Fläche der Bildvorlage 35 deutlich kleiner wird und somit mehr Licht durch die Bildvorlage 35 gelangen kann. Mit der Freiformlinse 34 weist der Projektor 30 somit eine höhere Lichtausbeute auf die Projektionsfläche auf. Dies führt bei dem erfindungsgemäßen Projektor 30 zu einer helleren Projektion des Hinweissymbols 20 auf der Fahrbahn FB.

Mit der Freiformlinse 34 ist somit bei dem erfindungsgemäßen Projektor 30 eine Steigerung der Projektionshelligkeit des auf der Fahrbahn FB projizierten Hinweissymbols 20 möglich ohne Erhöhung der Eingangsleistung der Lichtquelle 32.

Insbesondere bei einem Dauerbetrieb ergeben sich bei dem erfindungsgemäßen Projektor 30 besondere Vorteile, da mit der Freiformlinse 34 geringere Lichtstromverluste im Projektor 30 erzielt werden und sich somit der Projektor 30 deutlich weniger erwärmt, so dass bei Steigerung der Projektionshelligkeit des auf der Fahrbahn FB projizierten Hinweissymbols 20 keine aktive Kühlung des im Dauerbetrieb betriebenen Projektors 30 mittels eines Lüfters erforderlich ist und der Projektor 30 passiv gekühlt werden kann.

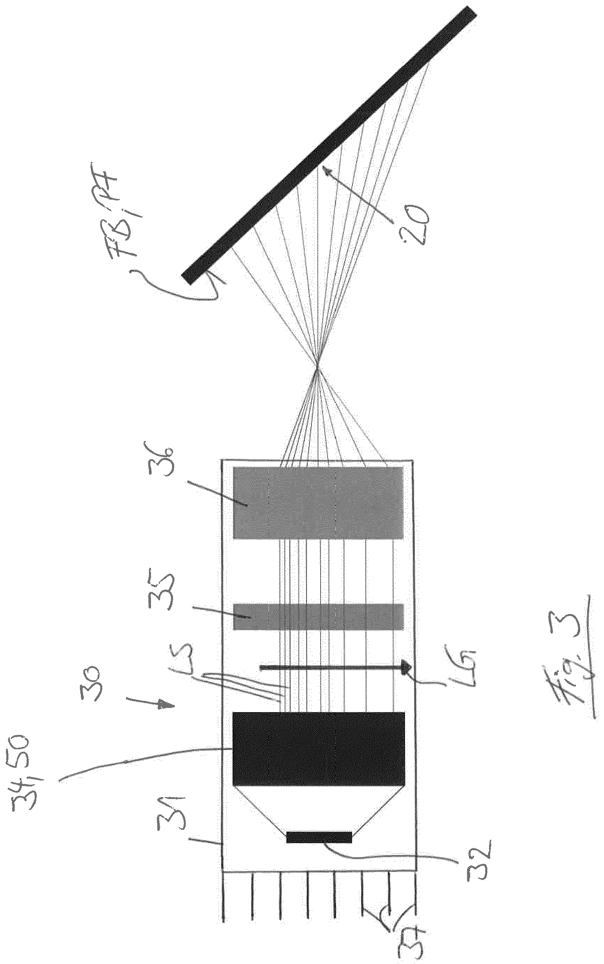

In der Figur 3 ist eine Weiterbildung des Projektors 30 der Figur 2 dargestellt. Gleiche Bauteile sind mit gleichen Bezugsziffern versehen.

In der Figur 3 ist die Freiformlinse 34 derart ausgebildet, dass der durch die Lichtstrahlen LS verdeutlichte Lichtstrom der Lichtquelle 32 mit einem Lichtgradienten LG auf die Bildvorlage 35 trifft, die bevorzugt als Gobo ausgebildet ist, so dass bei einer geneigt zum Projektor 30 angeordneten Projektionsfläche PF, die von der Fahrbahn FB gebildet ist, eine gleichmäßige Lichtverteilung entsteht und somit eine gleichmäßige Ausleuchtung des projizierten Hinweissymbols 20 auf der Projektionsfläche PF erzielt wird. Der Lichtgradient LG ist bevorzugt derart gewählt, dass bei einer geneigt angeordneten Projektionsfläche PF und somit bei einer Schrägprojektion des Hinweissymbols 20 auf die Fahrbahn FB eine gleichmäßige Lichtverteilung auf der Projektionsfläche PF und somit eine gleichmäßige Ausleuchtung des auf die Fahrbahn FB projizierten Hinweissymbols 20 erzielt wird. Hierdurch wird erzielt, dass bei einer Schrägprojektion des Hinweissymbols 20 auf die Fahrbahn FB weiter entfernte Bereiche des Hinweissymbols 20 genauso hell sind wie näher liegende Bereiche des Hinweissymbols 20.

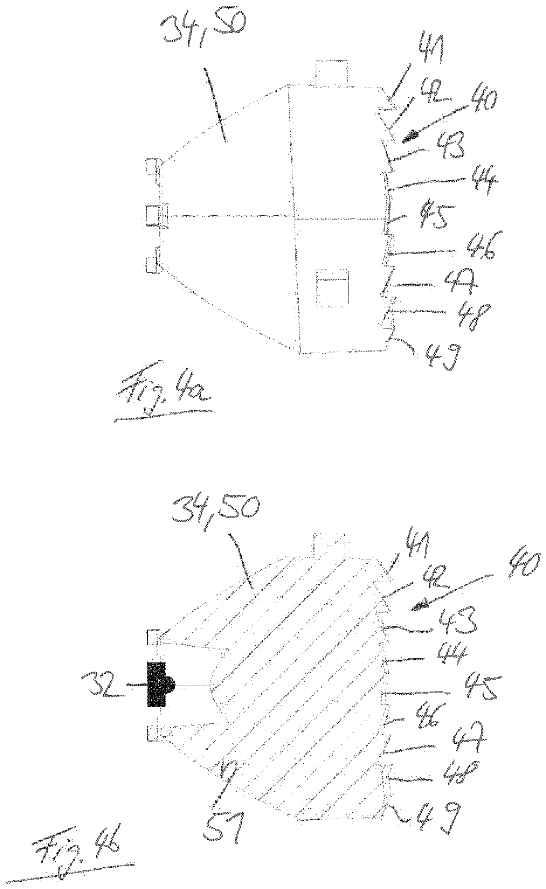

Hierzu kann die Freiformlinse 34 - wie in den Figuren 4a und 4b näher dargestellt ist - an einer lichtaustretenden Abschlussfläche 40 facettenartig ausgebildet sein und beispielsweise mit mehreren Facetten besetzt sein. Durch eine facettenartige Ausführung der vorderen, lichtaustretenden Abschlussfläche 40 der Freiformlinse 34 können der Freiformlinse 34 zusätzliche Eigenschaften in Bezug auf die Lichtverteilung verliehen werden und ein gewünschter Lichtgradient LG erzeugt werden.

Im dargestellten Ausführungsbeispiel der Figuren 4a, 4b ist die lichtaustretende Abschlussfläche 40 der Freiformlinse 34 aus mehreren planaren Einzelflächen 41-49 gebildet, die jeweils einzelne Facetten bilden und unterschiedliche Winkel zueinander aufweisen.

Die Freiformlinse 34 - kann wie in den Figuren 4a und 4b dargestellt - zusätzlich oder alternativ als TIR (Total Internal Reflection)-Linse 50 ausgebildet sein, die zumindest eine TIR (Total Internal Reflection)-Fläche 51 als Reflektionsfläche aufweist. Eine TIR (Total Internal Reflection)-Linse 50 ist eine spezielle Form eines Kollimators und ist in der Lage durch Reflektionen an der Grenzfläche zur Umgebung einen Großteil des von der Lichtquelle 32 emittierten Lichtes einzufangen. Eine TIR (Total Internal Reflection)-Linse 50 ermöglicht es weiterhin, die Lichtstrahlen der Lichtquelle 32 verlustfrei zu reflektieren und die Lichtstrahlen gezielt in eine Richtung auszusenden, so dass eine geringe Strahldivergenz erzielt wird. Dies ermöglicht es, mit dem erfindungsgemäßen Projektor 30 das Hinweissymbol 20 mit hoher Lichtausbeute auf die Fahrbahn FB zu projizieren.

Die Erfindung ist nicht auf das dargestellte Beispiel eines Gegengewichtsgabelstaplers 2 als Flurförderzeug 1 beschränkt und kann bei allen Arten von Flurförderzeugen angewandt werden, beispielsweise Schubmaststaplern und Lagertechnikgeräten.

Zudem kann an dem Flurförderzeug 1 nur ein Projektor 30 angeordnet werden, um bei einer Rückwärtsfahrt R oder bei einer Vorwärtsfahrt V oder im Dauerbetrieb unabhängig von der Fahrtrichtung ein bildhaftes Hinweissymbol 20 auf die Fahrbahn zu projizieren. Alternativ können zusätzliche Projektoren 30 vorgesehen werden, die zur Seite ein Hinweissymbol auf die Fahrbahn projizieren.

Es ist ebenfalls möglich, im Ausführungsbeispiel der Figur 2 den Kondensor 33 des erfindungsgemäßen Projektors 30 derart auszuführen, dass der Kondensor 33 aus mehreren Kondensorlinsen besteht, wobei eine der Kondensorlinsen des Kondensors als die Freiformlinse 34 ausgebildet ist, so dass der Kondensor 33 die Funktion der Freiformlinse aufweist und den Lichtstrom der Lichtquelle 32 auf den lichtdurchlässigen Bereich 40 der Bildvorlage 35 bündelt. Der Kondensor 33 passt somit den Lichtstrom der Lichtquelle 32 auf den lichtdurchlässigen Bereich 40 der Bildvorlage 35 an und bündelt somit den Lichtstrom der Lichtquelle 32 auf den lichtdurchlässigen Bereich 40 der Bildvorlage 35, wobei der Kondensor 33 weiterhin das Licht gleichmäßig auf die Projektionsebene verteilt.

Der Projektor 30 ist nicht auf den in der Figur 2 dargestellten Aufbau beschränkt. Auf den Kondensor 33 und/oder das Projektionsobjektiv 36 kann gegebenenfalls verzichtet werden, wie in dem Ausführungsbeispiel der Figur 3 dargestellt ist, wodurch sich der Aufbau des Projektors 30 vereinfacht.

Zudem ist die Erfindung nicht auf die Dreieckform des zu projizierenden Hinweissymbols 20 beschränkt. Bei dem zu projizierenden Hinweissymbol 20, das mit dem Projektor 30 auf die Fahrbahn FB als Projektionsfläche projiziert wird, kann es sich um ein anders gestaltetes bildhaftes Hinweissymbol handeln. Das bildhafte Hinweissymbol 20 kann - wie im dargestellten Ausführungsbeispiel - nur einen Bildbestandteil aufweisen, oder alternativ zusätzliche Bildbestandteile (z.B. eine Abbildung des Flurförderzeugs) und/ oder Schriftbestandteile enthalten. Das bildhafte Hinweissymbol 20 kann einfarbig oder mehrfarbig ausgeführt sein.

## Patentansprüche

1. Warnvorrichtung (3; 4) für ein Flurförderzeug (1), die an dem Flurförderzeug (1) angeordnet ein bildhaftes Hinweissymbol (20), insbesondere ein bildhaftes Warnsymbol, auf eine Fahrbahn (FB) projiziert, wobei die Warnvorrichtung (3; 4) als Projektor (30) ausgebildet ist, der eine Lichtquelle (32), die einen Lichtstrom aussendet, und eine Bildvorlage (35) des zu projizierenden Hinweissymbols (20) aufweist, die von dem von der Lichtquelle (32) erzeugten Lichtstrom durchleuchtbar ist, wobei die Bildvorlage (35) zumindest einen für den Lichtstrom der Lichtquelle (32) lichtdurchlässigen Bereich (40) und einen den Lichtstrom der Lichtquelle (32) abschattenden Bereich (41) aufweist, **dadurch gekennzeichnet, dass** der Projektor (30) eine zwischen der Lichtquelle (32) und der Bildvorlage (35) angeordnete Freiformlinse (34) aufweist, wobei die Freiformlinse (34) derart ausgeführt ist, dass der Lichtstrom der Lichtquelle (32) auf den lichtdurchlässigen Bereich (40) der Bildvorlage (35) gebündelt wird.

2. Warnvorrichtung nach Anspruch 1, **dadurch gekennzeichnet, dass** der Projektor (30) einen Kondensor (33) aufweist, der zwischen der Lichtquelle (32) und der Bildvorlage (35) angeordnet ist, wobei die Freiformlinse (34) zwischen dem Kondensor (33) und der Bildvorlage (35) angeordnet ist.

3. Warnvorrichtung nach Anspruch 1, **dadurch gekennzeichnet, dass** der Projektor (30) einen Kondensor (33) aufweist, der aus mehreren Kondensorlinsen besteht, wobei eine der Kondensorlinsen des Kondensors (33) als die Freiformlinse (34) ausgebildet ist, die den Lichtstrom der Lichtquelle (32) auf den lichtdurchlässigen Bereich (40) der Bildvorlage (35) bündelt.

4. Warnvorrichtung nach einem der Ansprüche 1 bis 3, **dadurch gekennzeichnet, dass** der Projektor (35) ein Gehäuse (31) aufweist, an dem benachbart zu der Lichtquelle (32) ein Kühlkörper mit Kühlrippen (37) angeordnet ist.

5. Warnvorrichtung nach einem der Ansprüche 1 bis 4, **dadurch gekennzeichnet, dass** die Freiformlinse (34) als TIR (Total Internal Reflection)-Linse (50) ausgebildet ist, die zumindest eine TIR (Total Internal Reflection)-Fläche (51) aufweist.

6. Warnvorrichtung nach einem der Ansprüche 1 bis 5, **dadurch gekennzeichnet, dass** die Freiformlinse (34) derart ausgebildet ist, dass der Lichtstrom der Lichtquelle (32) mit einem Lichtgradienten (LG) auf die Bildvorlage (35) trifft, so dass bei einer geneigt angeordneten Projektionsfläche (PF) eine gleichmäßige Lichtverteilung auf der Projektionsfläche (PF) erzielt wird.

7. Warnvorrichtung nach Anspruch 6, **dadurch gekennzeichnet, dass** die Freiformlinse (34) an einer lichtaustretenden Abschlussfläche (40) facettenartig ausgebildet ist.

8. Warnvorrichtung nach Anspruch 7, **dadurch gekennzeichnet, dass** die lichtaustretende Abschlussfläche (40) aus mehreren planaren Einzelflächen (41-49) gebildet ist, die unterschiedliche Winkel aufweisen.

9. Flurförderzeug (1) mit zumindest einer Warnvorrichtung (3; 4) nach einem der Ansprüche 1 bis 8.

## Claims

1. Warning apparatus (3; 4) for an industrial truck (1), which is arranged on the industrial truck (1) and projects an image-type information symbol (20), in particular an image-type warning symbol, onto a driving surface (FB), wherein the warning apparatus (3; 4) is configured as a projector (30) having a light source (32), which emits a luminous flux, and an image pattern (35) of the information symbol (20) to be projected, through which the luminous flux produced by the light source (32) is able to radiate, wherein the image pattern (35) has at least one region (40) which is light-transmissive for the luminous flux of the light source (32) and one region (41) which shadows the luminous flux of the light source (32), **characterized in that** the projector (30) has a freeform lens (34) arranged between the light source (32) and the image pattern (35), wherein the freeform lens (34) is embodied such that the luminous flux of the light source (32) is focused onto the light-transmissive region (40) of the image pattern (35).

2. Warning apparatus according to Claim 1, **characterized in that** the projector (30) has a condenser (33) arranged between the light source (32) and the image pattern (35), wherein the freeform lens (34) is arranged between the condenser (33) and the image pattern (35).

3. Warning apparatus according to Claim 1, **characterized in that** the projector (30) has a condenser (33) consisting of a plurality of condenser lenses, wherein one of the condenser lenses of the condenser (33) is configured as the freeform lens (34) which focuses the luminous flux of the light source (32) onto the light-transmissive region (40) of the image pattern (35).

4. Warning apparatus according to one of Claims 1 to 3, **characterized in that** the projector (35) has a housing (31) on which a heat sink having cooling ribs (37) is arranged in a manner adjacent to the light source (32).

5. Warning apparatus according to one of Claims 1 to 4, **characterized in that** the freeform lens (34) is configured as a TIR (total internal reflection) lens (50) having at least one TIR (total internal reflection) surface (51).

6. Warning apparatus according to one of Claims 1 to 5, **characterized in that** the freeform lens (34) is configured such that the luminous flux of the light source (32) is incident on the image pattern (35) with a light gradient (LG) such that, when a projection surface (PF) is arranged in an inclined fashion, uniform light distribution is obtained on the projection surface (PF).

7. Warning apparatus according to Claim 6, **characterized in that** the freeform lens (34) is configured, on a light-exiting termination surface (40), in the manner of facets.

8. Warning apparatus according to Claim 7, **characterized in that** the light-exiting termination surface (40) is formed from a plurality of planar individual surfaces (41-49) having different angles.

9. Industrial truck (1) having at least one warning apparatus (3, 4) according to one of Claims 1 to 8.

## Revendications

1. Dispositif d'alerte (3 ; 4) pour un chariot de manutention (1) qui, disposé sur le chariot de manutention (1), projette sur une voie de circulation (FB) un symbole de notification (20) pictural, notamment un symbole d'alerte pictural, le dispositif d'alerte (3 ; 4) étant réalisé sous la forme d'un projecteur (30) qui possède une source de lumière (32), laquelle émet un flux lumineux, et une image originale (35) du symbole de notification (20) à projeter, laquelle peut être traversée par la lumière du flux lumineux généré par la source de lumière (32), l'image originale (35) possédant au moins une zone transparente (40) pour le flux lumineux de la source de lumière (32) et une zone (41) d'occultation du flux lumineux de la source de lumière (32), **caractérisé en ce que** le projecteur (30) possède une lentille de forme libre (34) disposée entre la source de lumière (32) et l'image originale (35), la lentille de forme libre (34) étant réalisée de telle sorte que le flux lumineux de la source de lumière (32) est regroupé en faisceau sur la zone transparente (40) de l'image originale (35).

2. Dispositif d'alerte selon la revendication 1, **caractérisé en ce que** le projecteur (30) possède un condenseur (33) qui est disposé entre la source de lumière (32) et l'image originale (35), la lentille de forme libre (34) étant disposée entre le condenseur (33) et l'image originale (35).

3. Dispositif d'alerte selon la revendication 1, **caractérisé en ce que** le projecteur (30) possède un condenseur (33) qui se compose de plusieurs lentilles de condenseur, l'une des lentilles de condenseur du condenseur (33) étant réalisée sous la forme de la lentille de forme libre (34) qui regroupe en faisceau le flux lumineux de la source de lumière (32) sur la zone transparente (40) de l'image originale (35).

4. Dispositif d'alerte selon l'une des revendications 1 à 3, **caractérisé en ce que** le projecteur (35) possède un boîtier (31) au niveau duquel, un radiateur pourvu d'ailettes de refroidissement (37) est disposé adjacent à la source de lumière (32).

5. Dispositif d'alerte selon l'une des revendications 1 à 4, **caractérisé en ce que** la lentille de forme libre (34) est réalisée sous la forme d'une lentille TIR (Total Internai Reflection - Réflexion interne totale) (50) qui possède au moins une surface TIR (Total Internai Reflection) (51).

6. Dispositif d'alerte selon l'une des revendications 1 à 5, **caractérisé en ce que** la lentille de forme libre (34) est configurée de telle sorte que le flux lumineux de la source de lumière (32) est incident sur l'image originale (35) avec un gradient de lumière (LG), de sorte qu'une distribution de lumière homogène est obtenue sur la surface de projection (PF) avec une surface de projection (PF) disposée inclinée.

7. Dispositif d'alerte selon la revendication 6, **caractérisé en ce que** la lentille de forme libre (34) est configurée à la manière de facettes au niveau d'une surface de terminaison (40) de sortie de la lumière.

8. Dispositif d'alerte selon la revendication 7, **caractérisé en ce que** la surface de terminaison (40) de sortie de la lumière est formée par plusieurs surfaces individuelles (41-49) planes qui possèdent des angles différents.

9. Chariot de manutention (1) comprenant au moins un dispositif d'alerte (3 ; 4) selon l'une des revendications 1 à 8.
